Europäisches Patentamt

European Patent Office

Office européen des brevets

(11) Publication number: **0 104 784**

**A1**

# EUROPEAN PATENT APPLICATION

(21) Application number: **83304988.5**

(22) Date of filing: **30.08.83**

(51) Int. Cl.³: **B 60 K 37/02**

(30) Priority: **30.08.82 US 412746**

(43) Date of publication of application:
**04.04.84 Bulletin 84/14**

(84) Designated Contracting States:
**AT BE CH DE FR GB IT LI NL SE**

(71) Applicant: **DEERE & COMPANY**
1 John Deere Road
Moline Illinois 61265(US)

(72) Inventor: **Strunk, Richard Dean**
702 51st Ave.
East Moline Illinois 61244(US)

(72) Inventor: **Floyd, Vandor Granville**
R.R. No. 1, Box 169
Lynn Center Illinois 61262(US)

(72) Inventor: **Luth, Harold John**
52nd St. Court
Moline Illinois 61265(US)

(74) Representative: **Pears, David Ashley et al,**
REDDIE & GROSE 16 Theobalds Road
London WC1X 8PL(GB)

(54) Vehicle performance advisory system.

(57) Sensors (16, 18) indicate the current gear and engine speed of a tractor (10). An electronic control unit (20) calculates engine torque from engine speed and then calculates what would be the engine torque and the engine speed to maintain the same ground speed in progressively higher gears. It displays, on a unit (22), as the optimum gear and reduced engine speed that gear and corresponding engine speed which the calculations have shown will maintain the current ground speed without exceeding any maximum torque value or reducing engine speed below a minimum speed value.

FIG. 1

EP 0 104 784 A1

Croydon Printing Company Ltd.

VEHICLE PERFORMANCE ADVISORY SYSTEM

The present invention relates to an advisory system which displays instructions to the operator of a vehicle, which aid the operator to operate the vehicle in an efficient manner. The invention relates in particular to a performance advisory system for a powered vehicle having a multi-ratio transmission, comprising an electronic control unit responsive to engine torque to indicate when the driver can shift to a higher gear.

The productivity and fuel consumption of a tractor depend upon the operator's judgement in adjusting the tractor controls during field operation. In the past, it has been suggested to provide vehicles with monitors so that the operator can be informed of the status of various operating parameters of the vehicle. For example, vehicle monitors have monitored vehicle parameters, such as engine rpm, wheel slip, ground speed, drawbar pull and power, fuel consumption, engine power output and efficiency. However, with these monitoring systems, the operator must still rely on his own judgement to determine what control adjustments are needed to optimize the operating parameters of the vehicle.

A system has been proposed ("Emerging Problems: Energy, Environmental Protection" H F B Goehlich, Agricultural Engineering, June 1979, pp 25, 26) according to which drive torque is measured to indicate engine load and the operator is signalled to shift to a higher gear when the engine load drops below a certain level. Another system (US 4 150 497) signals when to shift up and down in dependence upon engine speed. Such known systems are not able to indicate the most efficient points at which to change gear, particularly having regard to the non-uniform spacing of the gears in a typical multi-gear vehicle such as an agricultural tractor.

The object of the present invention is to provide an improved system which overcomes this problem. The invention is characterised in that the control unit responds to engine speed and engine torque to calculate in accordance with the gear ratios of the transmission the highest gear which will maintain the existing ground speed without the engine torque exceeding a predetermined maximum torque and without the engine speed falling below a predetermined minimum speed, and by display means which display the calculated gear and the corresponding engine speed.

The control unit can contain, in memory, data corresponding to an engine torque speed characteristic of the engine and data relating to the gear ratios. Since the optimum gear setting and reduced engine speed are displayed to the operator, the transmission may be shifted to the optimum gear setting and the engine speed may be adjusted via a conventional throttle or engine speed control to the reduced engine speed. This optimum setting moves the engine into a more efficient operating range, resulting in reduced fuel consumption for the same productivity. In this manner, fuel economy may be obtained while maintaining a desired productivity or travel speed when operating under light draft conditions, such as when the tractor is pulling a planter.

The invention will be described in more detail, by way of example, with reference to the accompanying drawings, in which:

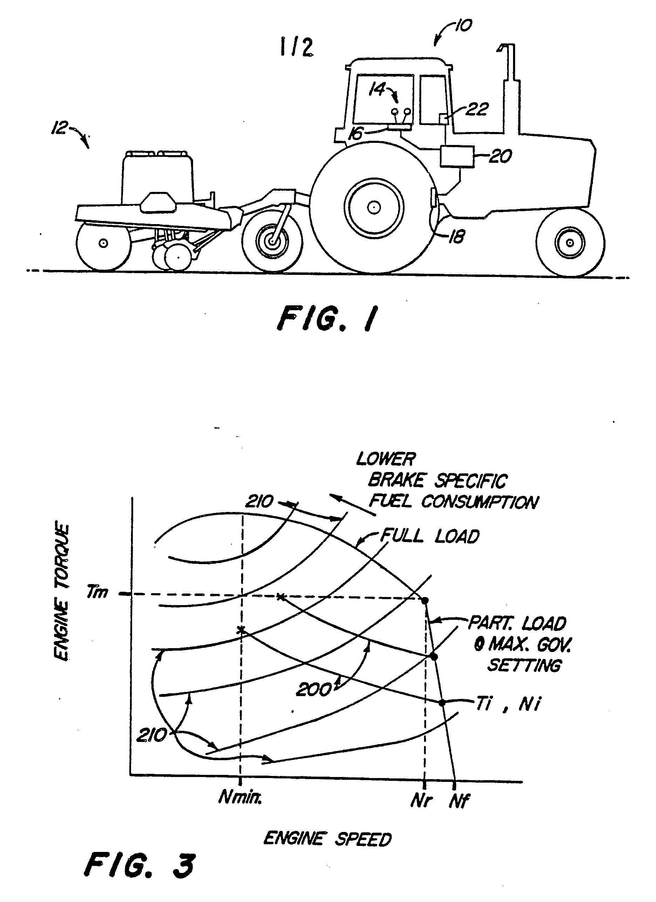

Fig 1 is a schematic illustration of a tractor and implement system including the present invention.

Fig 2 is a flow chart illustrating an algorithm which is executed during operation of the present invention.

Fig 3 is a graphical illustration of an engine torque, speed and fuel characteristic of a typical diesel engine.

A conventional agricultural vehicle, such as a tractor 10, includes a conventional multi-ratio transmission (not shown) powered by a conventional engine (not shown). An implement requiring less than full power of a tractor, such as the planter 12, may be pulled by the tractor 10. The transmission is controlled in the conventional manner by manipulation of shift levers 14. A gear ratio transducer 16, such as a conventional rotary potentiometer, provides a signal which represents the actual gear ratio of the transmission. An engine speed sensor 18, such as a conventional tachometer, provides a signal which represents the speed of the engine. The gear ratios and engine speed signals are communicated to a control unit 20 which may include conventional analog-to-digital converters, multiplexers, memory and computational components, such as a conventional microprocessor. The control unit processes the gear ratio and engine speed signals and generates information therefrom for display on a conventional alpha-numeric display 22 which may be located in a suitable location in the tractor operator's compartment.

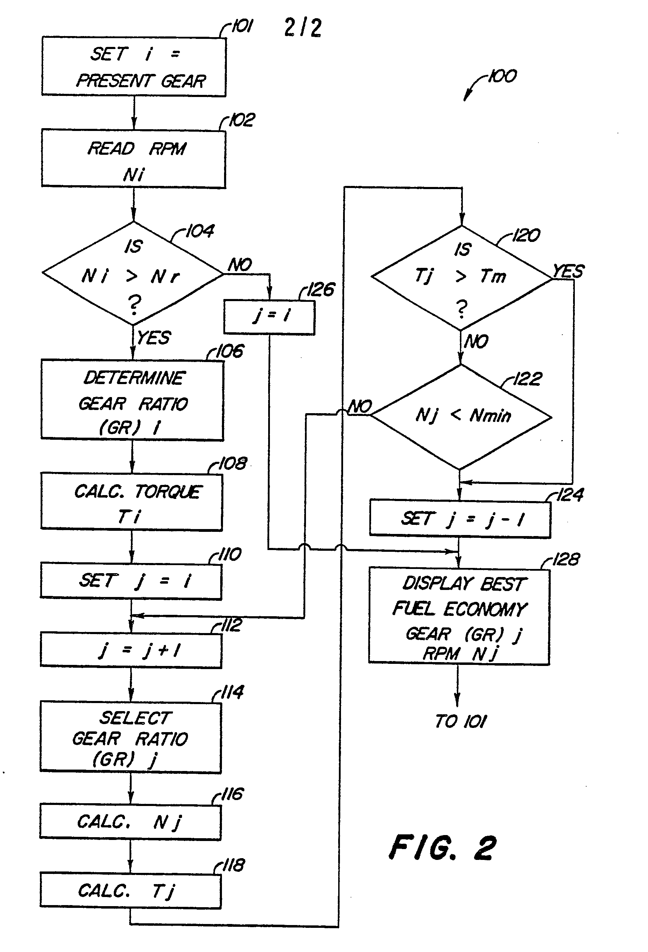

The control unit 20 executes the algorithm 100 which is shown in Fig 2. First, at 101, an index or integer "i" is set to a value representing the current gear setting of the transmission. For example, if the transmission is in fourth gear, then "i" will be set equal to 4. Next, at 102, the current value "Ni" of the engine rpm is obtained from sensor 18. Then, at 104, the current engine speed value "Ni" is compared to a rated engine speed value "Nr". The rated engine speed value "Nr" and the data contained in the graph of engine torque vs. engine speed, shown in Fig 3, are contained in a data array in memory, such as a look-up table, for use in the algorithm 100. If the sensed engine speed "Ni" is not greater than the rated engine speed "Nr", then the routine proceeds to step 126 where the index "j" is set equal to the index "i". Then, at 128, the present gear and the present engine rpm are displayed on display 22 so that the operator will know that the present gear ratio and engine speed are appropriate.

However, if the sensed engine speed "Ni" is greater than "Nr", then step 104 directs the algorithm to step 106 where the gear ratio "(GR)i" of the present gear is obtained from a look-up table, also contained in memory. Then, at 108, the present torque "Ti" of the engine is determined from the equation:

$$Ti = Tm(Nf - Ni)/(Nf - Nr)$$

where "Tm" is a maximum torque value from the engine characteristic shown in Fig 3 and "Nf" is a fast idle engine speed value at maximum govenor setting. Alternatively, the engine torque value "Ti" could be determined by using commercially available torque sensing devices.

- 4 -

Then, at step 110, integer "j" is set equal to the integer "i" representing the present gear setting. Then, at 112, the integer "j" is increased by 1. Next, at 114, the gear ratio (GR)j, corresponding to the next highest or jth gear setting, is obtained from memory. Then, at 116, the engine speed value, "Nj" which would maintain the same travel speed at the higher gear ratio, (GR)j, is calculated from the equation:

$$Nj = Ni \times ((GR)i/(GR)j).$$

Next, at 118, the torque, "Tj", corresponding to engine speed, "Nj", is calculated from the equation:

$$Tj = Ti \times (Ni/Nj).$$

Then, step 120 directs the algorithm to step 124 if the calculated torque value "Tj" is greater than the maximum torque value "Tm"; otherwise, the algorithm proceed to step 122. Step 122 directs the algorithm back to step 112 for further incrementing of the integer "j" if the calculated engine speed value "Nj" is not less than the minimum engine speed value "Nmin"; otherwise, step 122 directs the algorithm to step 124. The minimum engine speed value "Nmin" is contained in memory and is the engine speed corresponding to the lowest permissible speed established for the engine.

Step 124 decreases index "j" by 1. Then, step 128 causes display 22 to display to the operator the gear setting and the engine speed corresponding to the value of index "j". After step 128, the algorithm returns to step 101 for re-execution of the algorithm 100.

In short, the algorithm 100 repetitively increments index "j" and recalculations the new engine speed and torque values which would result if the same travel speed were maintained at the higher "jth" gear. This process is repeated until the calculated torque "Tj" exceeds the maximum torque "Tm" or until the calculated engine speed "Nj" falls below the minimum engine speed "Nmin". If these conditions are obtained, then index "j" is decreases by 1 so that step 128 will cause the display 22 to display to the operator the highest gear (and the corresponding engine speed) at which the tractor 10 can be driven without exceeding the maximum torque value "Tm" and without falling below the minimum engine speed "Nmin". By shifting up to this higher displayed gear, the operator can reduce engine speed to the displayed value while operating at the same productivity (travel speed). This conserves fuel because the entire torque/speed characteristic moves to the left (viewing Fig 3) along curves of constant horsepower 200 into more fuel efficient operating ranges and toward curves of lower constant brake specific fuel consumption, BSFC, 210.

Conversion of the above described flow chart into a standard language for implementing the algorithm described by the flow chart in a digital data processor, such as a microprocessor, will be evident to those skilled in the art.

CLAIMS

1.    A performance advisory·system for a powered vehicle having a multi-ratio transmission, comprising an electronic control unit (20) responsive to engine torque to indicate when the driver can shift to a higher gear, characterised in that the control unit (20) responds to engine speed and engine torque to calculate in accordance with the gear ratios of the transmission the highest gear which will maintain the existing ground speed without the engine torque exceeding a predetermined maximum torque and without the engine speed falling below a predetermined minimum speed, and by display means (22) which display the calculated gear and the corresponding engine speed.

2.    A performance advisory system according to claim 1, characterised in that the electronic control unit (20) comprises a memory containing data representing an engine torque-speed characteristic of the engine and derives the engine torque from engine speed and from the engine torque-speed characteristic.

3.    A performance advisory system according to claim 2, characterised in that the electronic control unit (20) calculates proposed engine speeds and proposed torques corresponding to gear ratios higher than the current gear ratio and such that the current vehicle travel speed would be maintained thereby and compares the proposed torques to the maximum torque and compares the proposed engine speeds to the minimum engine speed.

4.    A performance advisory system according to claim 3, characterised in that the current engine torque Ti is determined from the equation:

$$Ti = Tm \ (Nf - Ni)/(Nf - Nr)$$

where Tm is the predetermined maximum torque, Nf is a fast idle speed of the engine at maximum govenor setting, Nr is a rated speed of the engine and Ni is the current speed of the engine.

5. A performance advisory system according to claim 3 or 4, characterised in that the proposed engine speeds Nj are determined by the equation:

$$Nj = Ni \times ((GR)i/(GR)j),$$

where Ni is the current engine speed, (GR)i is the current gear ratio and (GR)j is the proposed gear ratio.

6. A method for selecting an optimum gear ratio setting and reduced engine speed for an engine-driven vehicle having a multi-ratio transmission, characterised by the steps of:

a) determining the actual gear ratio (GP)i of the transmission;

b) determining the actual engine speed Ni of the vehicle;

c) deriving an actual torque value Ti from the actual engine speed and from a known characteristic of the engine;

d) designating proposed gear ratios (GR)j which are higher than the actual gear ratio (GR)i;

e) determining proposed engine speeds Nj according to the equation: $Nj = Ni ((GR)i/(GR)j)$;

f) determining proposed torque values Tj according to the equation: $Tj = Ti (Ni/Nj)$;

g) comparing the proposed torque values Tj to a predetermined maximum torque value;

h) comparing the proposed engine speed value Nj to a predetermined minimum engine speed value;

i) selecting the highest of the proposed gear ratios such that the corresponding proposed torque value is less than the predetermined maximum torque value and such that the corresponding proposed engine speed is greater than the predetermined minimum engine speed; and

j) displaying to a vehicle operator the selected proposed gear ratio and its corresponding proposed engine speed.

0104784

1/2

FIG. 1

**FIG. 3**

LOWER
BRAKE SPECIFIC
FUEL CONSUMPTION

FULL LOAD

PART. LOAD
@ MAX. GOV.
SETTING

Ti , Ni

ENGINE TORQUE

Tm

Nmin.

Nr  Nf

ENGINE SPEED

0104784

2/2

101 SET i = PRESENT GEAR

102 READ RPM Ni

104 IS Ni > Nr ?  — NO →

126 j = i

YES ↓

106 DETERMINE GEAR RATIO (GR) i

108 CALC. TORQUE Ti

110 SET j = i

112 j = j + 1

114 SELECT GEAR RATIO (GR) j

116 CALC. Nj

118 CALC. Tj

100

120 IS Tj > Tm ?  — YES →

NO ↓

122 Nj < Nmin  — NO →

124 SET j = j - 1

128 DISPLAY BEST FUEL ECONOMY GEAR (GR) j RPM Nj

TO 101

FIG. 2

## EUROPEAN SEARCH REPORT

| DOCUMENTS CONSIDERED TO BE RELEVANT | | | EP 83304988.5 |
|---|---|---|---|
| Category | Citation of document with indication, where appropriate, of relevant passages | Relevant to claim | CLASSIFICATION OF THE APPLICATION (Int. Cl. ³) |
| Y,D | AGRICULTURAL ENGINEERING (ISSN 0002-1458), vol. 60, no. 6, (June 1979), St. Joseph Mi 49 085 (USA) HORST F.B. GOEHLICH: "Emerging Problems: Energy, Environmental Protection", pages 25-26 <br><br> * Page 25, last paragraph - page 26, first paragraph * <br><br> -- | 1 | B 60 K 37/02 |
| Y | DE - A1 - 3 146 711 (NIPPONDENSO) <br><br> * Claims; Description page 3, lines 26-31, page 7, lines 1-18; page 9, line 20 - page 10, line 16 * <br><br> -- | 1 | |
| A,D | US - A - 4 150 497 (WEBER) <br><br> * Claim 1; Description page 3, lines 11-15 * <br><br> -- | 1 | TECHNICAL FIELDS SEARCHED (Int. Cl. ³) <br><br> B 60 K <br> B 60 Q |
| A,P | DE - A1 - 3 228 416 (FIAT AUTO S. P.A.) <br><br> * Claims; Description page 13, line 34 - page 14, line 14 * <br><br> ---- | 1 | |

The present search report has been drawn up for all claims

| Place of search | Date of completion of the search | Examiner |
|---|---|---|
| VIENNA | 01-12-1983 | DENK |